(19) Europäisches Patentamt / European Patent Office / Office européen des brevets

(11) **EP 4 144 433 A1**

(12) **EUROPEAN PATENT APPLICATION**

(43) Date of publication:
**08.03.2023 Bulletin 2023/10**

(21) Application number: **21194801.3**

(22) Date of filing: **03.09.2021**

(51) International Patent Classification (IPC):
**B01D 61/02** $^{(2006.01)}$        **B01D 61/04** $^{(2006.01)}$
**C02F 1/44** $^{(2006.01)}$         **C02F 1/66** $^{(2006.01)}$
**C02F 101/10** $^{(2006.01)}$

(52) Cooperative Patent Classification (CPC):
**C02F 1/442; B01D 61/026; B01D 61/12;
B01D 61/146; B01D 61/22; C02F 1/441;**
B01D 2315/14; C02F 1/66; C02F 2101/10;
C02F 2101/108; C02F 2101/301; C02F 2101/36;
C02F 2103/023; C02F 2209/003; C02F 2301/046;

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Grundfos Holding A/S
8850 Bjerringbro (DK)**

(72) Inventors:
• **Kiilerich, Bruno
  8850 Bjerringbro (DK)**
• **Villacorte, Loreen Ople
  8850 Bjerringbro (DK)**

(74) Representative: **Plougmann Vingtoft a/s
Strandvejen 70
2900 Hellerup (DK)**

(54) **A METHOD AND SYSTEM FOR REMOVAL OF DISSOLVED MATTER FROM WATER**

(57)    The present invention relates to a method and system for removal of dissolved matter, such as dissolved salt, from water. The method is preferably carried out in a system comprising at least one membrane filter and a receiving system. The method preferably comprises a first batch filtration producing a permeate output and a second batch filtration, wherein the permeate output of the first batch filtration is timewise split into at least two batch volumes where one batch volume is inlet to the second batch filtration and another batch volume is inlet to the receiving system, said permeate output is split in a timewise way such that the concentration of one or more solutes, such as Silica, Calcium, Chloride, sulphate, boron, is different in the batch volume that are inlet to the second batch filtration and to the receiving system.

Fig. 2C

(52) Cooperative Patent Classification (CPC): (Cont.)
C02F 2301/08; C02F 2303/22

**Description**

FIELD OF THE INVENTION

The present invention relates to a method and system for removal of dissolved matter, such as dissolved salt, from water. The method is preferably carried out in a system comprising at least one membrane filter and a receiving system. The method preferably comprises a first batch filtration producing a permeate output and a second batch filtration, wherein the permeate output of the first batch filtration is timewise split into at least two batch volumes where one batch volume is inlet to the second batch filtration and another batch volume is inlet to the receiving system, said permeate output is split in a timewise way such that the concentration of one or more solutes, such as Silica, Calcium, Chloride, sulphate, boron, is different in the batch volume that are inlet to the second batch filtration and to the receiving system.

BACKGROUND OF THE INVENTION

Water filtration processes using nanofiltration membranes can be used in various applications including treatment of groundwater, surface water and wastewater for drinking water production, industrial process water production and wastewater re-use (e.g., cooling tower). Nanofiltration can remove a significant fraction of multi-valent and large suspended solids or uncharged dissolved compounds while also removing a smaller fraction of monovalent and small uncharged dissolved compounds. For some of these ions (e.g., chloride, nitrate, etc.) or compounds (e.g., silica, boric acid, etc.), removal is governed by the ion composition of the feedwater, up-concentration of the rejected multi-valent components during the filtration process and/or the pH of the feedwater. These mechanisms may result in decreasing rejection, which rejection may even become negative for some ions, meaning the ion concentration in the permeate output is higher than in the feedwater. Such scenario can likely happen when the system is operated at high water recoveries (WR = $Q_{filtered}/Q_{feed}$). Overall, a low or a negative rejection can be a major challenge in applications where partial removal of monovalent and or small uncharged dissolved compounds is needed.

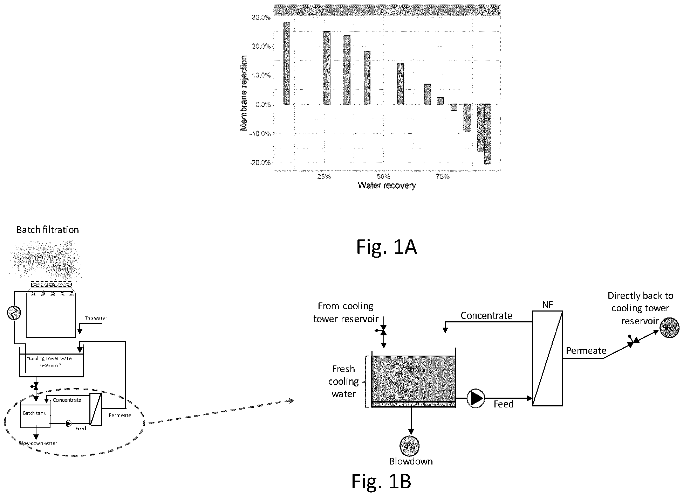

The inventors have observed in a project concerned with batch nanofiltration (NF) of cooling water for deionization that membrane rejection of e.g. chloride varies over a run as shown in fig. 1A (from positive to negative) when the filtration is carried out as sketched infig. 1B.

Such decreasing or even negative rejection limits the effectivity of the filtering process.

Hence, an improved filtration system would be advantageous and in particular a more efficient and/or reliable filtration method and system would be advantageous for increasing rejection of chloride or other ions and/or at least mitigating, reducing or minimizing the risk of scaling when increasing rejection of silica or other uncharged compounds when conditioning the feed water by adjusting pH.

OBJECT OF THE INVENTION

It is a further object of the present invention to provide an alternative to the prior art. In particular, it may be seen as an object of the present invention to provide at least tends to mitigate the above mentioned problems of the prior art.

SUMMARY OF THE INVENTION

Thus, the above described object and several other objects are intended to be obtained in a first aspect of the invention by providing a method for removal of dissolved matter, such as dissolved inorganic matter or dissolved salt, from water, the system comprises

- at least one membrane filter and a receiving system;

the method comprises

- a first batch filtration producing a permeate output,
- a second batch filtration,

wherein

- the permeate output of the first batch filtration is timewise split into at least two batch volumes where one batch volume is inlet to the second batch filtration and another batch volume is inlet to the receiving system,
- said permeate output is split in a timewise way such that the concentration of one or more solutes are different in the batch volume that is inlet to the second batch filtration and the batch volume that is inlet to the receiving system.

Preferably, thereby the full batch of water may be timewise split into batches and preferable also a residue.

The inventors have realized that embodiments according to the first aspect of the invention may potentially at least mitigate the problem related to negative or low rejection occurring for some solutes in batch filtration. Without being bound by theory, the inventors have observed that they can take advantage of the separation mechanisms of nanofiltration membranes which affects the permeability of charged components such as salt ions differentially according to the specific ion and composition of solutes in the liquid.

The permeability of the membrane decides the mass flux of a specific ion, which is used to calculate the rejection of the specific ions as per below equation:

$$Rejection = \frac{Concentration_{avr.\ feed\ side} - Concentration_{permeate}}{Concentration_{avr.\ feed\ side}}$$

In batch filtration, the concentration of the solutes in the feed water change according to water recovery and permeability of the specific ions. So if rejection of a specific ion is constant, then an increase in concentration on the feed side of the membrane, will result in a higher concentration of that ion on the permeate side to satisfy the equation. Furthermore if the rejection is decreasing over time, while the feed side concentration is increasing, then the mass flux of the specific ion will increase and hence the concentration in the permeate will increase. In some cases the rejection can even become negative, as explained by Labban et al. (2017) (O. Labban et al., Journal of Membrane Science, 521 (2017), page 1830-32, DOI: 10.1016/j.memsci.2016.08.062).

The behaviour of this, is governed by the dominant solutes in the liquid, their interaction with the membrane, and the influence of other ions in solution. Pages et al. (2013) (N. Pages et al., Chemical Engineering Science 104 (2013), page 1107-1115, DOI 10.1016/j.ces.2013.09.042) using a continuous filtration setup where concentrations were kept constant, it can be found that for a single salt in solution (either NaCl or $MgCl_2$), the chloride rejection is different whether chloride is a salt of a monovalent cation ($Na^+$) or a divalent cation ($Mg^{2+}$), with the highest rejection for the latter. From Pages et al (2013) it can furthermore be derived that in a mix of solutes where a divalent anion, such as sulfate ($SO_4^{2-}$) is dominant, then rejection of a monovalent anion ($Cl^-$) can become negative. How negative the rejection becomes is further influenced by which cations are dominant in the solution. For cases where divalent cations (in this case $Mg^{2+}$) are dominant, the rejection will be higher compared to if it was a dominant monovalent cation in solution (in this case $Na^+$).

The selectivity between ions is not only limited to being a question between divalent and monovalent ions, but as shown by Epsztein et al. (2018) (Epsztein et al., Journal of Membrane Science, 548 (2018), page 694-701, DOI: 10.1016/j.memsci.2017.10.049), there is furthermore a selectivity between the monovalent ions (e.g. chloride and nitrate). This selectivity between monovalent anions may also be expected to apply for other monovalent ions, if these are present as solutes in the same liquid. This has been observed in the inventors experiments, where an increase in pH of the water, increased the concentration of the monovalent anionic species of silica. Judged from the experiment this monovalent anionic silica species had a better rejection than chloride, and it was observed that chloride rejection was decreased in these experiments, compared to experiments where silica was in an uncharged state.

On the basis of the observation made by the inventors, the inventors have realized that if a membrane filtration process is designed to select the solutes in the liquid that is filtered, and/or conditioning the water prior to filtration, the rejection of certain solutes can be controlled. In continuous filtration the permeate will have the same solute composition during filtration, which means that a split of the permeate will not make sense in relation to controlling rejection in a subsequent filtration based on permeate solute composition. In contrary, when performing batch filtration, the feed water and thus the permeate differs over time, and splitting the permeate stream according to which solutes are beneficial to have in the solution can be used actively to improve rejection of certain solutes or avoid derived effects such as scaling, by subjecting only a part of the permeate to a second filtration, which possibly also could be conditioned to enhance this effect of improved rejection.

By a timewise split of permeate output, permeate batches having different compositions and concentrations of solutes are produced. One of the batches will typically have a lower concentration of one or more solutes which, if present, may cause a reduction in the rejection of another solute. When such a batch is subjected to a batch filtration, a relatively higher rejection may be obtained due to the lower concentration of the one or more solutes. As a non-limiting example, a batch of permeate may be produced which has a high concentration of monovalent anions, such as $Cl^-$, and a low concentration of divalent anions, such as $SO_4^{2-}$. The lower concentration of divalent anions, $SO_4^{2-}$, has a positive effect on the membrane rejection of anions, $Cl^-$, in a subsequent batch filtration and will hence yield a higher overall rejection of $Cl^-$ when considering the complete number of batches filtered.

Another effect obtained by the splitting, is that a permeate batch volume may be conditioned to increase rejection of ions in a subsequent batch filtration while at the same time reducing the risk of e.g. scaling/precipitation of another ion. As a non-limiting example, a batch of permeate is produced having a low concentration of ions, such as $Ca^{2+}$. Increase of the pH in such a batch can be used to increase the rejection of $SiO_2$, as this will become a charged species, in a subsequent batch filtration and since the batch has a low concentration of $Ca^{2+}$, the risk of scaling of $Ca^{2+}$ is low.

$SiO_2$ as referenced herein is typically amorphous silica ($SiO_2 \cdot 0,32\ H_2O$) or silicic acid ($Si(OH)_4$) which is the species that is present in aqueous solutions and the most dominant species in natural aqueous fluids at pH < 8.5. In more alkaline solutions silicic acid is in equilibrium with its charged species which is what preferred embodiments of the inventions take advantages of by increasing pH of the water to be filtered.

The solutes may preferably be one or more of calcium, chloride, sodium, phosphate, silica, nitrate, boron.

The filtering of the water and permeate batch volumes typically leaves one or more residues the method typically involves discharging residues.

Non-limiting examples on "water" as used herein includes waste water, cooling tower water, ground water, sea water, brine, process water, tap water, river water, lake/reservoir water, softened water.

By this, the method may be disclosed as batch process in which a batch of water is split into a timewise first batch volume of permeate, a timewise later batch volume of permeate and typically a residue which contains a higher concentration of dissolved matter than the batch of water being filtered. Further, either the timewise first batch(es) or the timewise later batch(es) are filtered by use of the membrane filter typically leaving a residue which contains a higher concentration of dissolved matter than the permeate.

Comparing the results obtained by splitting the permeate into batches according to the invention, with a batch filtration where all permeate produced by a batch filtration is subjected to a further batch filtration, a more efficient removal of dissolved matter is obtained.

Further, as the invention resides inter alia in that the concentration of one or more solutes are different in the batch volume that is inlet to the second batch filtration and the batch volume that is inlet to the receiving system, which resides in the interaction between the concentration of specific ions as disclosed above, the batch of water which is filtered in the first batch filtration contains multiple different ions.

"Timewise" as used herein is to be interpreted in a broad context and not limited to splitting in accordance with a spend filtration time. Timewise is used to reflect that some permeate is produced earlier in the filtration than a later produced permeate. Accordingly, timewise may accordingly also refer to a batch volume produced irrespectively of the actual amount of time spend, but reflects when in the filtration process it has been produced. Further, a batch of permeate may be defined based on the concentration of one or more solutes in either of the feed and/or the permeate. Based on this, the time at which the split is effectuated may be based on time, concentration of one or more solutes and/or volume of permeate.

It is to be noted, that while the description presented herein has been focused toward splitting into a timewise first batch volume of permeate and a timewise later batch volume of permeate, the invention may be implemented in a way where a batch of water is split into more than two batch volumes being split according to the points in time where they occur. As an example, the split may be into a timewise first batch volume of permeate, a timewise intermediate batch volume of permeate and a timewise later batch volume of permeate. Each of such timewise batches may be filtered or fed to a delivery system as otherwise disclosed herein.

Without being bound by theory, the invention and particular preferred embodiments are suggested to provide one or more of the following advantages:

- Splitting of the filtered water to obtain a certain solute composition in the water favorable for increasing rejection of specific ions or compounds
- Utilize the same membrane for the multiple filtrations needed by introducing an intermediate tank/second tank (or more tanks), which lowers capital expenditure
- Conditioning of water in the intermediate tank/second tank by dosing of chemicals or ions to increase membrane rejection of specific ions
- Use the split of permeate actively to reduce risk of scaling when conditioning water for increasing e.g. silica rejection
- Use the split of permeate actively to reduce the drawback of decreased chloride rejection when water is conditioned to increase e.g. silica rejection

In preferred embodiments, first batch filtration may comprise:

i) filtering by use of the membrane filter said batch of said water to provide

- said permeate output, wherein a timewise first batch volume of the permeate output is either inlet to the second batch filtration or the receiving system, and a timewise later batch volume of the permeate is fed to the other of the second batch filtration or the receiving system;

until the batch of water has been reduced to a predefined volume;
and, wherein the second batch filtration comprising may comprise

ii) filter by use of the membrane filter the batch volume inlet to the second batch filtration to provide a permeate which is fed to the receiving system until the volume of the inlet permeate batch volume has been reduced to a predefined volume.

The method may preferably further comprise providing a new batch of said water and repeat step i), wherein

- a new timewise first batch volume of permeate is inlet to the same of either the second batch filtration or the receiving system as the previous timewise first batch volume of permeate, and
- a new timewise later batch volume of permeate is inlet to the same of either the second batch filtration or the receiving system as the previous timewise later batch volume of permeate.

The filtration system may further comprise a first tank and a second tank, and the method may comprise:

- timewise selectively feeding permeate output from the membrane filter to either of the receiving system or the second tank, and subsequently
- filtering the fluid contained in the second tank by use of said membrane filter and feeding permeate output obtained by the said membrane filter to the receiving system.

By this, the same membrane filter may be used for both the first batch filtration and for the second batch filtration.
In other embodiments, the membrane filter may comprise a first membrane filter and a second membrane filter, and wherein the method may comprise;

- timewise selectively feeding permeate output from the first membrane filter to either of the second tank or a receiving system;
- filter by use second membrane filter fluid contained in the second tank and feeding permeate output obtained by the second membrane filter to the receiving system.

In preferred embodiments, the batch of water from which dissolved matter is to be removed comprises ions, such as chloride ions, and the timewise first batch volume(s) of permeate may be fed to the receiving system and timewise later batch volume(s) of permeate may be inlet to the second batch filtration.
In preferred embodiments, the batch of water from which dissolved matter is to be removed comprises compounds such as silica, or boron that may become charged by adjusting pH of the water, and wherein a timewise first batch volume of permeate may be inlet to the second batch filtration and the timewise later batch volumes are fed to the receiving system.
In preferred embodiments, one or more timewise intermediate batches volumes, being batches of permeate produced timewise in-between the timewise first batch volume(s) of permeate and the timewise later batch volume(s) of permeate may be inlet to the second batch filtration or the receiving system, and a permeate produced by the second batch filtration thereby may be fed to the receiving system preferably until the volume of intermediate batch volume has been reduced to a predefined volume;
In preferred embodiments, the batch of water is cooling tower water.
In preferred embodiments, the receiving system is a cooling tower or a cooling tower reservoir.
In preferred embodiment, a filtration system may be used which filtration system may comprise a pump fluidically connected to the first tank and to the membrane filter to pump water from the first tank to the membrane filter.
In preferred embodiments, the membrane filter(s) may comprises a nanofilter, reverse osmosis filter, filter for ultrafiltration and/or filter for microfiltration.
In preferred embodiments, the batch(es) of said timewise first permeate batch volume(s) or timewise late permeate batch volume(s) fed to the second batch filtration may be conditioned prior filtering, wherein the conditioning may comprise pH adjustment and/or addition of selected ions to manipulate the solute composition of the water.
In preferred embodiments, the batch of water may be conditioned prior to said first batch filtration, wherein the conditioning may comprise pH adjustment and/or addition of selected ions to manipulate the composition of water.
In preferred embodiments, the split of the permeate output may be based on one or more criterion on concentration of one or more solutes in either of the feed and/or permeate output.
In preferred embodiments, the dissolved matter may comprise in-organic matter such as, but not limited to, calcium, chloride, sodium, phosphate, silica, nitrate, boron.
In a second aspect, the invention relates to a filtration system for removal of dissolved matter, such as dissolved salt, from water. The system preferably comprises a first tank, a second tank, a membrane filter and a receiving system, or may be connectable to a receiving system.

Preferably:

- the membrane filter has an inlet to receive water to be filtered, said inlet may be fluidically connected to the first tank through a closable first fluid connection to receive water from the first tank, and the membrane filter may have a concentrate outlet fluidically connected to a first fluid distribution device configured to selectively feed concentrate obtained by the membrane filter to the first tank by a second fluid connection to feed concentrate, or to the second tank by a third fluid connection, said membrane filter further comprising a permeate outlet;
- a second fluid distribution device may be provided fluidicly connected to the permeate outlet, said fluid distribution device being configured to selectively feed permeate from the permeate outlet to either of the receiving system or the second tank;
- the second tank may be fluidicly connected to the inlet of the membrane filter through a closable fourth fluid connection to deliver permeate from the second tank to the inlet of the membrane filter.

In embodiments according to the second aspect,

- the membrane filter comprises a first membrane filter and a second membrane filter;

wherein

- said first membrane filter may have an inlet to receive water to be filtered, said inlet may be fluidicly connected to the first tank through a first fluid connection to receive fluid, and the first membrane filter may have a concentrate outlet fluidicly connected by a second fluid connection to feed concentrate obtained by the first membrane filter to the first tank, said first membrane filter may further comprise a permeate outlet;
- a fluid distribution device may be provided fluidicly connected to the permeate outlet of the first membrane filter, said fluid distribution device may be configured to selectively feed permeate from the permeate outlet to either of a receiving system or the second tank;
- said second membrane filter may have an inlet to receive fluid to be filtered, said inlet may be fluidicly connected to the second tank through a third fluid connection to receive fluid from the second tank, and the second membrane filter may have a concentrate outlet fluidicly connected by a fourth fluid connection to feed concentrate obtained by the second membrane filter to the second tank, said second membrane filter may further comprise a permeate outlet fluidicly connected to the receiving system by a fifth fluid connection to feed permeate to the receiving system.

BRIEF DESCRIPTION OF THE FIGURES

The present invention and in particular preferred embodiments thereof will now be described in more detail with regard to the accompanying figures. The figures show ways of implementing the present invention and are not to be construed as being limiting to other possible embodiments falling within the scope of the attached claim set.

Figure 1A is a graph illustrating typical membrane rejection of chloride as a function of water recovery in a batch membrane filtration process of cooling water.

Figure 1B schematically illustrating a known method of filtering water from a cooling tower.

Figure 2 schematically illustrates two embodiments of the present invention; fig. 2A illustrates an embodiment in which timewise first batch volumes of permeate are fed to a second tank, fig. 2B illustrates and embodiment in which timewise late batch volumes of permeate are fed to a second tank, and fig. 2C is a flow chart schematically illustrating the embodiments of fig. 2A and 2B.

Figure 3 schematically illustrates a further embodiment of filtration system wherein filtering of permeate batches contained in a second tank involves feeding a concentration to a first tank;

Figure 4 schematically illustrates a further embodiment of a filtration system utilizing the same membrane filter for filtering fluid from the first and second tank;

Figure 5 schematically illustrate a further embodiment of a filtration system utilizing a separate membrane filter filtering fluid from the first and the second tank;

DETAILED DESCRIPTION OF PREFERRED EMBODIMENTS

The description of preferred embodiments has in certain aspects been focussed towards filtration of water from a cooling tower. However, the invention is not limited to that particular fluid and is capable of filtering other fluids as well.

As presented herein, the invention relates to method for removal of dissolved matter, such as dissolved inorganic matter or dissolved salt, from water. The method is typically implemented by use of a system which comprises at least one membrane filter 2 and a receiving system 8. While the system may be implemented in numerous ways, some overall considerations as to the method will first be disclosed.

The method resides in a process involving a first batch filtration and a second batch filtration. The first batch filtration process is carried out on a batch of water from which dissolved matter is to be removed and produces a permeate output.

The permeate output produced by the first batch filtration is preferably timewise split into at least two batch volumes where one batch volume is inlet to the second batch filtration and another batch volume is inlet to the receiving system.

The permeate output produced by the first batch filtration is preferably split in a timewise way such that the concentration of one or more solutes are different in the batch volume that are inlet to the second batch filtration and to the receiving system.

As presented herein, non-limiting examples on the solutes is one or more of calcium, chloride, sodium, phosphate, silica, nitrate, boron.

In the following the result of such a timewise split is in non-limiting examples labelled a timewise first batch volume of permeate (FBV) and a timewise later batch volume of permeate (LBV).

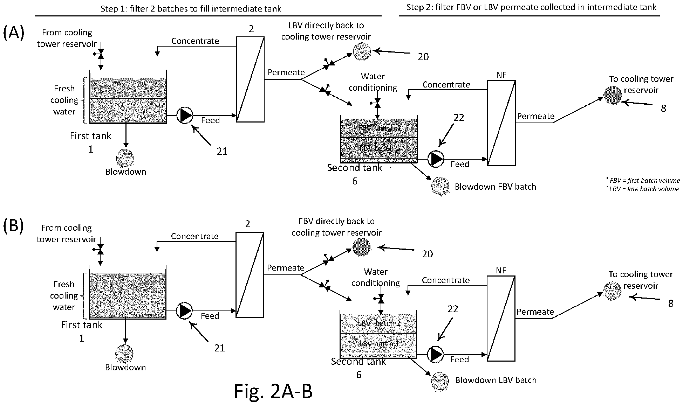

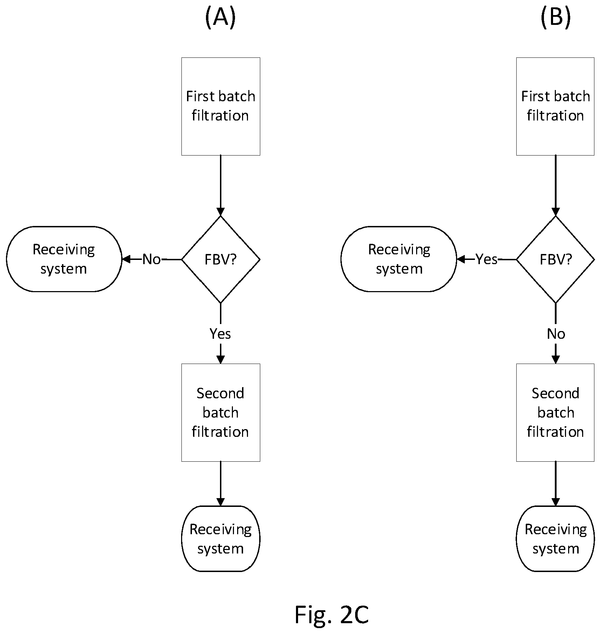

Reference is made to fig. 2A and 2B. These two figures schematically illustrates two modes of filtering water from a cooling tower. The method is carried out in a filtration system comprising a first tank 1, a second tank 6, a membrane filter 2 and a receiving system 8. In fig. 2, the receiving system 8 is a cooling tower 20 or a reservoir of the cooling tower. It is to be emphasised that fig. 2 illustrates two steps which are carried out by use of the same membrane filter 2.

Further, in fig. 2 FBV refers to timewise first batch volume of permeate, and LBV refers to timewise later batch volume of permeate. As illustrated, the two different methods shown in fig. 2A and 2B differs from each other by whereto the FBVs and the LBVs are fed. In fig. 2A the FBVs are fed into the second tank 6 and the LBVs are fed to the cooling tower. In fig. 2B, the FBVs are fed to the cooling tower whereas the LBVs are fed to the second tank 6. Despite the differences in operation mode of fig. 2A and fig. 2B, the filtration methods may be disclosed in the following way.

As an initial step, a batch of water to be filtered is fed into the first tank 1. Thereafter, the filtration is commenced with what for easy referencing may be labelled a step i). This step i) comprises filtering, by use of the membrane filter 2, the batch of water contained in the first tank 1. This filtering provides:

- a concentrate which is fed back to the first tank 1, and
- a permeate.

As the concentrate and permeate is produced while the water is fed into the membrane filter some of the permeate is produced timewise earlier than a timewise later produced permeate (similar for concentrate). In accordance with the invention, a timewise first batch volume of the permeate is fed to either of the second tank 6 or the receiving system 8 (please cf. fig. 2A and 2B). While timewise refers to the point in time where the batch is produced, the invention is often implemented by defining first and later by volumes, where for instance a FBV is the first produced volume and the LBV is a later produced volume. Further, a timewise later batch volume, LBV, of the permeate is fed to the other of second tank 6 or the receiving system 8. This is continued until the batch of water in the first tank 1 has been reduced to a predefined volume.

As illustrated in fig. 2A and 2B the result is, inter alia, that either a FBV or a LBV is contained in the second tank 6.

After the first batch of water to be filtered has been filtered as disclosed above, the method continues with adding a new batch of said water to the first tank 1. It is preferred to empty the tank 1 before adding a new batch of water. The step which was referred to as step i) above is repeated. During this repetition:

- a new timewise first batch volume of permeate is fed to the same of the second tank 6 or the receiving system 8 as the previous timewise first batch volume of permeate, and
- a new timewise later batch volume of permeate is fed to the same of the second tank (6) or the receiving system (8) as the previous timewise later batch volume of permeate.

Here, a "new timewise" refers to that the filtering is carried out on a new batch of water to be filtered, which new batch of water is contained in the first tank 1. As the new batches goes to the same position as the previous, two permeate batches are fed to the second tank (6) composed of either timewise first batch volumes of permeate or timewise later batch volumes of permeate.

It is to be emphasized that the method is disclosed based on only two batches of water to be filtered for clarity reasons only and that other numbers of batch of water to be filtered can be used in relation to the present invention.

With a single permeate batch or two or more permeate batches (being either two LBV(s) or FBV(s)) present in the second tank, a filtering of the batch(es) is then carried out by use of the membrane filter 2. By filtering the permeate batch volum(es) contained in the second tank 6 a concentrate is produced which is fed back to the second tank 6 and a permeate which is fed to the receiving system 8. This filtering is continued until the volume of permeate batch volumes contained in the second tank 6 has been reduced to a predefined volume.

A receiving system 8 as disclosed herein may be a reservoir for containing the fluid, typically for a later use. In embodiments pertaining to cooling tower facilities, the receiving system 8 may be a cooling tower or a cooling tower reservoir.

After the permeate batch volumes contained in the second tank 6 has been reduced to a predefined volume, the filtering is concluded by emptying, which emptying may be referred to as blow down, the first 1 and the second tank 6, where after the filtering system and method are ready to commence a new filtering procedure. Such a blow down will contain the matter being filtered off from the water.

A particular preferred embodiment of the method disclosed in fig. 2A referring to silica removal will now be detailed. The batch of water to be filtered may contain calcium and silica and it has been found that FBV(s) comprises silica and a low concentration of calcium, whereas LBV(s) comprises silica and a larger concentration of calcium. This is probably due to that silica is uncharged and thereby not affected by the membrane filter, whereas calcium is charged and the mass flux of calcium over the membrane is increasing with and increasing concentration in the feed water. To increase rejection of silica, the pH can be increased. However, for increasing rejection of silica there are two drawbacks that advantageously could be solved:

a) Increasing pH will increase calcium scaling
b) Introducing a new anionic species will decrease chloride rejection.

On a): Collecting the first volume of the permeate FBVs is beneficial in order to decrease calcium in the water composition where pH will be increased. A combination of a high membrane rejection and a low concentration, the mass flow of calcium in the FBVs water is low and hence will the concentration in the second tank 6. This is suggested to minimize the risk of scaling when pH of the water in the second tank 6 in the subsequent filtration step is increased before filtration.

On b) In the FBV water the concentration of chloride is low, as filtration of the feed water during this period both has a low chloride concentration and a positive membrane rejection. With a low concentration of chloride in the water in the second tank 6, the drawback of getting a decreased membrane rejection of chloride when increasing pH may be counteracted.

A particular preferred embodiment of the method disclosed in fig. 2B referring to chloride removal will now be detailed. During the first batch runs of step 1, the permeate FBVs are guided directly back to the cooling tower. As the chloride rejection is positive in this part of the run, chloride will be concentrated in the first tank and the permeate returned to the cooling tower will have a low chloride concentration.

The next permeate produced is guided to the second tank 6 and the remaining volume containing the rejected ions is discharged. During this filtration period, chloride rejection is low or even negative (due to the solute composition of the feed water), which means that chlorides will pass over the membrane and be collected in the second tank. A new batch of water is then fed into the first tank 1, and the process repeated.

When the second tank 6 contains LBVs (two in the example), the water in the second tank 6 is filtered. The complete volume of permeate from this filtration is send back to the cooling tower and the last of the water in the batch is discharged (which contains the rejected ions). As all ions in the water is suggested affected by the initial filtrations and splitting of the water, the solute composition in the second tank will have low concentration of e.g. divalent anions, which is favorable in regards to increasing membrane rejection of chloride, and thus increase the overall membrane rejection of chlorides for the complete filtration cycle.

The two different embodiments shown in fig. 2A and in fig. 2B have been illustrated in the flow chart shown in fig. 2C. Kindly note that the legends "(A)" and "(B)" refer to fig. 2A and fig. 2B. As illustrated in fig. 2C-(A) a first batch filtration is carried out and if the permeate produced is a first batch volume of permeate (FBV) this first batch volume of permeate is inlet to the second batch filtration, and the permeate thereby produced is fed to the receiving system. If, on the other hand the permeate produced by the first batch filtration is not a first batch volume of permeate (FBV), the permeate produced is inlet to the receiving system 8.

Similarly, fig. 2C-(B) illustrates that if the permeate produced by the first batch filtration is a first batch volume of permeate, this permeate is inlet to the receiving system 8. If the permeate produced is not a first batch volume of permeate, the permeate is inlet to the second batch filtration and the permeate thereby produced is inlet to the receiving system 9.

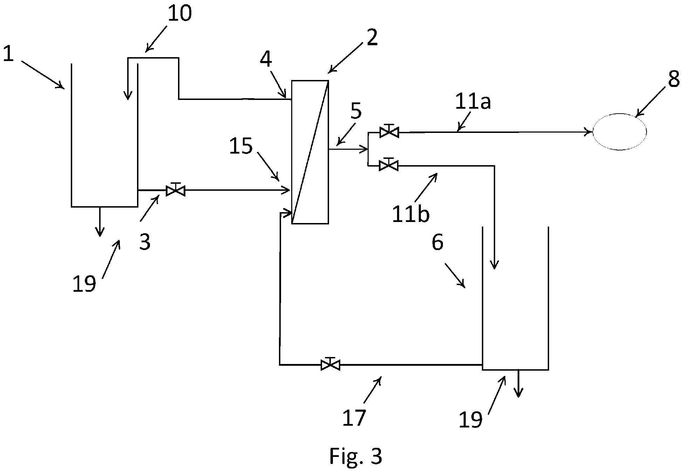

Reference is made to fig. 3 schematically illustrating a further embodiment of the invention for removal of dissolved matter. In this embodiment, the method is carried out in a filtration system comprising a first tank 1, a second tank 6, a membrane filter 2 and a receiving system 8. The method comprises the step of filtering by use of the membrane filter 2 a batch of said water contained in the first tank 1 to provide:

- a concentrate which is fed back to the first tank 1, and
- a permeate.

A timewise first batch volume of permeate is fed to either of the second tank 6 or the receiving system 8, and a timewise later batch volume of the permeate is fed to the other of second tank 6 or the receiving system 8. This is controlled by the fluid distribution device 11a, 11b.

The filtering of the batch of water is continued until the batch of water in the first tank 1 has been reduced to a predefined volume. This predefined volume is then emptied out of the tank 1.

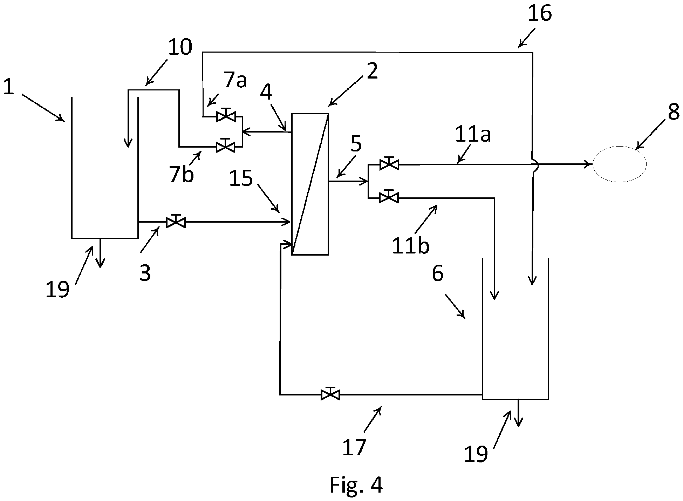

Thereafter, the permeate batch volume contained in the second tank 6 is filtered by use of the membrane filter 2 to provide a concentrate which is fed back to the first tank 1 and a permeate which is fed to the receiving system 8 until the volume of permeate batch volumes contained in the second tank 6 has been emptied out, then the filtration proceeds from the first tank 1 until the fluid has been reduced to a predefined volume, by when the remaining volume is discharged. The feed of permeate from the second tank 6 to the membrane filter 2 is made by the fluid connection 17. If the concentrate is to be fed back to the second tank 6 and the filtration cycle proceeds here until the fluid has been reduced to a predefined volume, by when the remaining volume is discharged, a fluid distribution device 7a, 7b and a fluid connection 16 as disclosed in connection with fig. 4 may be used for that purpose.

After the first tank 1 and the second tank 6 are emptied, the method for removal of dissolved matter may be commenced. Same reference numerals for same or similar features as presented in fig. 4 are used for same or similar features in the embodiment of fig. 3.

Reference is now made to fig. 4 illustrating a first embodiment of a filtration system utilizing the same membrane filter for filtering fluid from the first and the second tank 1, 6. In this embodiment and other embodiments disclosed herein, the membrane filter 2 is typically embodied as a filter module having a casing (not illustrated) encapsulating the filter material. An inlet 15 is provided to receive water to be filtered, wherein such an inlet may be provided in the casing. The inlet 15 is fluidicly connected to the first tank 1 through a closable first fluid connection 3 to receive water from the first tank 1. Such a fluidic connection may be provided by a pipe with a closable valve as illustrated in the figure.

The membrane filter 2 also has a concentrate outlet 4 which also may be provided in the casing. The outlet 4 is fluidicly connected to a first fluid distribution device 7a, 7b. The illustrated fluid distribution device 7a, 7b comprises two individually closable valves connected fluidically in parallel and to the concentrate outlet 4. Thereby, the fluid distribution device 7a, 7b is configured to selectively feed a concentrate obtained by the membrane filter 2 to the first tank 1 by a second fluid connection 10, or to the second tank 6 by a third fluid connection 16. This is accomplished by selectively open one of the closable valves and close the other valve. Again the fluid connections are typically pipes.

The membrane filter 2 also comprises a permeate outlet 5 for outlet of permeate produced by the membrane filter 2. A second fluid distribution device 11a, 11b is provided fluidically connected to the permeate outlet 5. The illustrated fluid distribution device 11a, 11b comprises two individually closable valves connected fluidically in parallel and to the permeate outlet 5. Thereby the fluid distribution device 11a, 11b being configured to selectively feed permeate from the permeate outlet 5 to either of the second tank 6 or the receiving system 8. As also illustrated in fig. 4, the fluidic connections, typically pipes, are also comprised to feed the fluid from the permeate outlet, through the valves and to either of the second tank 6 or the receiving system 8.

The second tank 6 is in the disclosed embodiment fluidicly connected to the inlet 15 of the membrane filter 2 through a closable fourth fluid connection 17 to deliver the permeate contained in the second tank 6 to the inlet 15 of the membrane filter 2. The closability is in the illustrated embodiment provided by a closable valve.

During use of the embodiment illustrated in fig. 4, the fluid distribution devices 7a, 7b and 11a, 11b are operated to be in open or closed configured according to whether the FBVs should be fed to the second tank 6 or to the receiving system 8 and, similarly, whether the LBVs should be fed to the second tank 6 or the receiving system 8.

If the FBVs are to be fed to the second tank 6, the connection 11a is closed and the connection 7b, 11b and 3 are open during the production of the FBVs. During production of the LBVs the connection 11a is open and the connection 11b is closed whereby LBVs are fed to the receiving system 8. During this production of LBVs and FBVs the connection represented by 7a in the first fluid distribution device 7a, 7b is closed whereas the connection represented by 7b is open. When the permeate contained in the second tank 6 is to be filtered, the connections 17, 7a, and 11a are opened whereas the connections 7b, 11b and 3 are closed, whereby the permeate is filtered by the membrane filter 2 and the thereby produced permeate is fed to the receiving system 8.

If LBVs are to be fed to the second tank 6, connections 3, 7b and 11a are open during production of FBVs, whereby the FBVs are fed to the receiving system 8. When LBVs are produced, connections 11a is closed and 11b opened whereby LBVs are fed into the second tank 6. Filtering of permeate contained in the second tank 6 follows the same scheme as disclosed above.

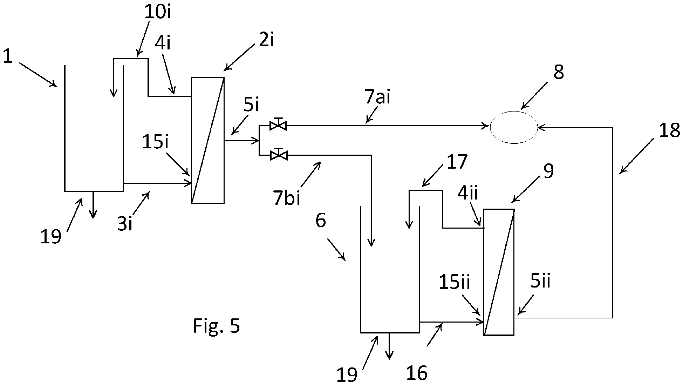

Although use of the same membrane filter for filtering fluid contained in the first and the second tanks 1, 6 has great advantages, the invention may also be embodied by use of separate membrane filters. Such an embodiment is shown in fig. 5. In the disclosed embodiment, the membrane filter may be viewed comprising a first membrane filter 2i and a second membrane filter 9. Also in this embodiment, the membrane filters may be embodied as disclosed above and comprise a casing. The first membrane filter 2i has an inlet 15i to receive water to be filtered and the inlet 15i is fluidicly connected to the first tank 1 through a first fluid connection 3i to receive fluid to be filtered. The first membrane filter 2i has a concentrate outlet 4i fluidicly connected by a second fluid connection 10i to feed concentrate obtained by the first membrane filter 2i to the first tank 1. The first membrane filter 2i has also a permeate outlet 5i.

A fluid distribution device 7ai, 7bi is provided fluidicly connected to the permeate outlet 5i of the first membrane filter, said fluid distribution device 7ai, 7bi being configured to selectively feed permeate from the permeate outlet 5i to either of the second tank 6 or a receiving system 8 by comprising individually closable valves.

The second membrane filter 9 has an inlet 15ii to receive fluid to be filtered, said inlet 15ii is fluidically connected to the second tank 6 through a third fluid connection 16 to receive permeate contained in the second tank 6, and the second membrane filter 9 has a concentrate outlet 4ii fluidicly connected by a fourth fluid connection 17 to feed a concentrate obtained by the second membrane filter 9 to the second tank 6. The second membrane filter 9 further comprising a permeate outlet 5ii fluidicly connected to the receiving system 8 by a fifth fluid connection 18 to feed permeate to the receiving system 8.

The fluid distribution device 7ai, 7bi is operated depending on whether the FBVs or the LBVs are to be fed to the receiving system 8 or the second tank 6. If the FBVs are to be fed to the receiving system connection 7ai is open whereas 7bi is closed during the production of the FBVs. If FBVs are to be fed to the second tank 6, the connection 7ai is closed and the connection 7bi is open during production of FBVs. Or, said in general, the connections 7ai and 7bi are open or closed in dependency of where the batch volumes is intended to go.

In the embodiments shown in the figures a discharge connection 19 is arranged in connection with the tanks. Such discharge connections is/are used for discharging residues, if any, left in the tanks after filtration.

In a particular preferred embodiment, the water to be filtered comprises ions, such as chloride ions. In such embodiments, the water contained in the first tank 1 comprises ions, such as chloride ions, and in such embodiments, it is preferred that the timewise first batch volumes of permeate (FBVs) are fed to the receiving system 8 and the timewise later batch volumes (LBVs) of permeate are fed to the second tank 6. The timewise later batch volumes of permeate contained in the second tank 6 are subsequently filtered by the membrane filter 2 (or 9 for the embodiment of fig. 5) and the thereby produced permeate is fed to the receiving system 8. Before subjecting the timewise later batch volumes of permeate contained in the second 6 to batch filtration, conditioning of water, such as adding specific solutes, may be carried out.

In another particular preferred embodiment, the water to be filtered comprises silica. In such embodiments, water contained in the first tank 1 comprises silica, and in such embodiments it is preferred that the timewise first batch volumes of permeate (FBVs) are fed to the second tank 6 and the timewise later batch volumes of permeate (LBVs) are fed to the receiving system 8. The timewise first batch volumes of permeate contained in the second tank 6 are subsequently filtered by the membrane filter 2 (or 9 for the embodiment of fig. 5) and the thereby produced permeate is fed to the receiving system 8. Before subjecting the timewise first batch volumes of permeate contained in the second 6 to batch filtration, conditioning of water, such as altering the pH, may be carried out.

The invention is not limited to producing only first batch volume of permeate and later batch volumes of permeate, as one or more timewise intermediate batches volumes of permeate may be produced. Such an intermediate batch of permeate produced is produced timewise in-between the timewise first batch volume(s) of permeate and the timewise later batch volume(s) of permeate and is/are fed to a further tank or the receiving system (8). In such embodiments, method further comprising filter by use of the membrane filter 2 the permeate batch volume contained in the further tank to provide a concentrate which is fed back to either of the first tank 1 or the further tank and a permeate which is fed to the receiving system 8 until the volume of permeate batch volume contained in the further tank 6 has been reduced to a predefined volume.

In a particular preferred embodiment, the water contained in the first tank 1 is cooling tower water. In such embodiments, the receiving system 8 is typically a cooling tower 20, such as a reservoir of the cooling tower (see fig. 2). Thus, by such embodiments, the invention provides an efficient filtration of water used in a cooling tower. As illustrated in fig. 2A and 2B, the invention may be operated in two modes where FBVs or LBVs are fed either to the cooling tower or to the second tank 6.

The filtration system typically comprises one or more pumps arranged to pump fluid from first tank 1 and the second tank 6 to the membrane filter. Such a pump 21 is shown in fig. 2 where it is fluidically connected to the first tank 1 and to the membrane filter 2 to pump water from the first tank 1 to the membrane filter 2. In the embodiments shown in fig. 2 a further pump 22 is provided to feed permeate from the second tank 6 and to the membrane filter 2. However, it is to be noted that a further pump may not be necessary as the pump 21 in combination with a suitable fluid distribution device may be used instead of the further pump 22. As the filtration typically is implemented as a batch process, a single pump may be use together with a fluid distribution device (not illustrated) which selectively can feed either water from the first tank 1 to the membrane filter 2 or permeate from the second tank 6 to the membrane filter.

Further auxiliary pumps may be provided e.g. for pumping water from a water source, such as a cooling tower and into the first tank 1 and for pumping permeate from the membrane filter 2 and to the receiving system 8. However, the pump arranged to feed fluid into the membrane 2 may be dimensioned so that this pump provides both the flow of permeate and concentrate to their respective destinations.

The membrane filter or filters may comprise a nanofilter, a reverse osmosis filter, a filter for ultrafiltration and/or a filter for microfiltration.

In preferred embodiments of the invention, the split of the permeate output is based on one or more criterion on concentration of one or more solutes in either of the feed and/or permeate output. In some preferred embodiments, the concentration of one or more solutes is determined by use of a sensor and the criteria may be a predetermined threshold of concentration which when reached triggers the point in time where the split is to be made. In other embodiments, the criteria may be based the volume-wise (volume of batch of water as function of time) or timewise evolution of concentration of solutes in the feed of permeate. In such embodiments, the split may be made when for instance the slope decreases, is zero, or before it becomes negative.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

List of reference symbols used

| | |
|---|---|
| 1 | First tank |
| 2 | Membrane filter |
| 2i | First membrane filter |
| 3 | First fluid connection |
| 4 | First concentrate outlet |
| 5 | First permeate outlet |
| 6 | Second tank |
| 7a, 7b | First fluid distribution device |
| 8 | Receiving system |
| 9 | Second membrane filter |
| 10 | Second fluid connection |
| 11a, 11b | Second fluid distribution device |
| 12 | Second permeate outlet |
| 14 | Closable third fluid connection |
| 15 | Inlet (of membrane filter) |
| 16 | Third fluid connection |
| 17 | Fourth fluid connection |
| 18 | Fifth fluid connection |
| 19 | Discharge connection |
| 20 | Cooling tower |
| 21 | Pump |
| 22 | Pump |

**Claims**

1. A method for removal of dissolved matter, such as dissolved inorganic matter or dissolved salt, from water, the method is carried out in a system comprising at least one membrane filter (2) and a receiving system (8), the method comprises

   • a first batch filtration producing a permeate output,
   • a second batch filtration,

   wherein

   • the permeate output of the first batch filtration is timewise split into at least two batch volumes where one batch volume is inlet to the second batch filtration and another batch volume is inlet to the receiving system (8),
   • said permeate output is split in a timewise way such that the concentration of one or more solutes are different in the batch volume that is inlet to the second batch filtration and the batch volume that is inlet to the receiving system (8).

2. A method according to claim 1, wherein the solutes are one or more of calcium, chloride, sodium, phosphate, silica, nitrate, boron.

3. A method according to claim 1 or 2, wherein the first batch filtration comprising:

   i) filtering by use of the membrane filter (2) said batch of said water to provide

   • said permeate output, wherein a timewise first batch volume of the permeate output is either inlet to the second batch filtration or the receiving system (8), and a timewise later batch volume of the permeate is fed to the other of the second batch filtration or the receiving system (8);

   until the batch of water has been reduced to a predefined volume;
   and, wherein the second batch filtration comprising
   ii) filter by use of the membrane filter (2) the batch volume inlet to the second batch filtration to provide a permeate which is fed to the receiving system (8) until the volume of the inlet permeate batch volume has been reduced to a predefined volume.

4. A method according to claim 3, wherein the method further comprising of providing a new batch of said water and repeat step i), wherein

   • a new timewise first batch volume of permeate is inlet to the same of either the second batch filtration or the receiving system (8) as the previous timewise first batch volume of permeate, and
   • a new timewise later batch volume of permeate is inlet to the same of either the second batch filtration or the receiving system (8) as the previous timewise later batch volume of permeate.

5. A method according to any one of the preceding claims, wherein the filtration system further comprising a first tank (1) and a second tank (6), wherein the method comprising

   • timewise selectively feeding permeate output from the membrane filter (2) to either of the receiving system (8) or the second tank (6), and subsequently
   • filtering the fluid contained in the second tank (6) by use of said membrane filter (2) and feeding permeate output obtained by the said membrane filter (2) to the receiving system (8).

6. A method according to any one of the preceding clams, wherein said batch of water comprises ions, such as chloride ions, and wherein the timewise first batch volume(s) of permeate is(are) fed to the receiving system (8) and timewise later batch volume(s) of permeate is(are) inlet to the second batch filtration.

7. A method according to any one of the preceding claims, wherein said batch of water comprises compounds such as silica, or boron that may become charged by adjusting pH of the water, and wherein a timewise first batch volume of permeate is inlet to the second batch filtration and the timewise later batch volumes are fed to the receiving system (8).

8. A method according to any one of the preceding claims, wherein one or more timewise intermediate batches volumes, being batches of permeate produced timewise in-between the timewise first batch volume(s) of permeate and the timewise later batch volume(s) of permeate is/are inlet to the second batch filtration or the receiving system (8), and wherein a permeate produced by the second batch filtration thereby is fed to the receiving system (8) until the volume of intermediate batch volume has been reduced to a predefined volume;

9. A method according to any one of the preceding claims, wherein the receiving system (8) is a cooling tower or a cooling tower reservoir (20).

10. A method according to any one of the preceding claims, wherein the membrane filter comprising a nanofilter, reverse osmosis filter, filter for ultrafiltration and/or filter for microfiltration.

11. A method according to any one of the preceding claims, wherein the said batch(es) of said timewise first permeate batch volume(s) or timewise late permeate batch volume(s) fed to the second batch filtration is(are) conditioned prior filtering, wherein the conditioning comprising pH adjustment and/or addition of selected ions to manipulate the solute composition of the water.

12. A method according to any one of the preceding claims, wherein said batch of water is conditioned prior to said first batch filtration, wherein the conditioning comprising pH adjustment and/or addition of selected ions to manipulate the composition of water.

13. A method according to any one of the preceding claims, wherein the split of the permeate output is based on one or more criterion on concentration of one or more solutes in either of the feed and/or permeate output.

14. A method according to any one of the preceding claims, wherein the dissolved matter comprising in-organic matter such as, but not limited to, calcium, chloride, sodium, phosphate, silica, nitrate, boron.

15. A filtration system for removal of dissolved matter, such as dissolved salt, from water, the system comprising a first tank (1), a second tank (6), a membrane filter (2) and a receiving system (8), wherein

   • the membrane filter (2) has an inlet (15) to receive water to be filtered, said inlet (15) is fluidicly connected to the first tank (1) through a closable first fluid connection (3) to receive water from the first tank (1), and the membrane filter (2) has a concentrate outlet (4) fluidicly connected to a first fluid distribution device (7a, 7b) configured to selectively feed concentrate obtained by the membrane filter (2) to the first tank (1) by a second fluid connection (10) to feed concentrate, or to the second tank (6) by a third fluid connection (16), said membrane filter (2) further comprising a permeate outlet (5);
   • a second fluid distribution device (11a, 11b) is provided fluidicly connected to the permeate outlet (5), said fluid distribution device (11a, 11b) being configured to selectively feed permeate from the permeate outlet (5) to either of the receiving system (8) or the second tank (6);
   • the second tank (6) is fluidicly connected to the inlet (15) of the membrane filter (2) through a closable fourth fluid connection (17) to deliver permeate from the second tank (6) to the inlet (15) of the membrane filter (2).

Fig. 1A

Batch filtration

Fig. 1B

Fig. 2A-B

(A)

(B)

```
┌──────────┐
│First batch│
│filtration │
└──────────┘
     │
     ▼
   ◇ FBV? ◇ ──No── ▶ ( Receiving system )
     │
    Yes
     │
     ▼
┌──────────┐
│  Second  │
│  batch   │
│filtration │
└──────────┘
     │
     ▼
( Receiving system )
```

```
┌──────────┐
│First batch│
│filtration │
└──────────┘
     │
     ▼
( Receiving system ) ◀── Yes── ◇ FBV? ◇
     │
     No
     │
     ▼
┌──────────┐
│  Second  │
│  batch   │
│filtration │
└──────────┘
     │
     ▼
( Receiving system )
```

Fig. 2C

Fig. 3

Fig. 4

Fig. 5

EP 4 144 433 A1

# EUROPEAN SEARCH REPORT

**Application Number**

EP 21 19 4801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/270609 A1 (HEIKKILA HEIKKI [FI] ET AL) 29 October 2009 (2009-10-29) * paragraph [0188] – paragraph [0194]; example 6 * ----- | 1,10,15 | INV. B01D61/02 B01D61/04 C02F1/44 |
| X<br>A | US 2003/127391 A1 (CRAFT FRANK S [US] ET AL) 10 July 2003 (2003-07-10) * figure 1 * * paragraph [0042] – paragraph [0054] * ----- | 1-14<br><br>15 | ADD. C02F1/66 C02F101/10 |

**TECHNICAL FIELDS SEARCHED    (IPC)**

B01D
C02F

The present search report has been drawn up for all claims

| Place of search | Date of completion of the search | Examiner |
|---|---|---|
| The Hague | 17 February 2022 | Châtellier, Xavier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 19 4801

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2022

| Patent document cited in search report | | Publication date | Patent family member(s) | | Publication date |
|---|---|---|---|---|---|
| US 2009270609 | A1 | 29-10-2009 | CA | 2653685 A1 | 06-12-2007 |
| | | | EP | 2044225 A1 | 08-04-2009 |
| | | | US | 2009270609 A1 | 29-10-2009 |
| | | | WO | 2007138167 A1 | 06-12-2007 |
| | | | ZA | 200704450 B | 25-09-2008 |
| US 2003127391 | A1 | 10-07-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **O. LABBAN et al.** *Journal of Membrane Science,* 2017, vol. 521, 1830-32
- **N. PAGES et al.** *Chemical Engineering Science,* 2013, vol. 104, 1107-1115
- **EPSZTEIN et al.** *Journal of Membrane Science,* 2018, vol. 548, 694-701